Europäisches Patentamt

(19) European Patent Office

Office européen des brevets

(11) Publication number: **0 040 910**
**B1**

(12) **EUROPEAN PATENT SPECIFICATION**

(45) Date of publication of patent specification: 12.03.86

(51) Int. Cl.⁴: **F 02 B 37/14**

(21) Application number: 81301759.7

(22) Date of filing: 21.04.81

(54) **Hydraulic assist turbocharger system.**

(30) Priority: 27.05.80 US 153566

(43) Date of publication of application:
02.12.81 Bulletin 81/48

(45) Publication of the grant of the patent:
12.03.86 Bulletin 86/11

(84) Designated Contracting States:
AT BE CH DE FR GB IT LI LU NL SE

(56) References cited:
EP-A-0 022 678
DE-B-1 180 192
FR-A-2 146 553
FR-A-2 410 132
GB-A- 488 396
GB-A-1 118 906
US-A-2 503 289
US-A-2 654 991
US-A-3 096 615
US-A-3 163 984
US-A-3 473 322
US-A-3 869 866

(73) Proprietor: THE GARRETT CORPORATION
9851-9951 Sepulveda Boulevard P.O. Box 92248
Los Angeles, California 90009 (US)

(72) Inventor: Byrne, Joe L.
3416, Del Amo Boulevard
Torrance California (US)
Inventor: Kobayashi, Robert J.
5739, Capeswood Drive
Rancho Palos Verdes California (US)
Inventor: Nancarrow, James H.
23621 Evalyn Avenue
Torrance California (US)

(74) Representative: Arthur, George Fitzgerald et al
KILBURN & STRODE 30, John Street
London WC1N 2DD (GB)

Courier Press, Leamington Spa, England.

## Description

This invention relates to turbocharger systems for supplying charge air to a combustion engine comprising a turbocharger including a turbine driven by engine exhaust gases and driving a compressor.

Such systems are highly advantageous in that relatively dense air is supplied to the engine but under some conditions of engine operation, for example at low speed and full load or during low speed acceleration, the exhaust gases do not have enough energy to provide sufficient charge air.

Many proposals are known for boosting or supplementing the normal charge output. For example the proposals of US—A—2503289 (Nettel), US—A—3163984 (Dumont) and FR—A—2146553 (Etat Francais) disclose turbochargers which include an exhaust gas turbine to supply charge air to the engine and a combustor in the conduit between the engine exhaust and the turbine in which fuel and a portion of by-passed charge air is burned to produce a higher energy exhaust gas to drive the turbine. These systems also require some form of starter to initiate drive of the turbocharger until the compressor provides enough charge air for the combustor to supply sufficient exhaust energy so that the turbocharger can sustain rotation and provide charge air for starting of the engine. Once the engine is running, the fuel to the combustor is regulated to maintain an optimum charge air output. Many alternative proposals for assisting the exhaust gas turbine exist, a good example of one being the present Applicant's co-pending European Application 80302380.3 (EP—A—00223678, published on 21.01.81) which describes a number of arrangements in which the shaft of the exhaust-driven turbine and the compressor also carries a non-ventilated hydraulic turbine wheel to which high pressure liquid is supplied under certain conditions of operation.

An object of the present invention is to provide a further arrangement that may be advantageous under other conditions, for example, when starting the engine, at which time it will be appreciated that no exhaust gases are available.

According to one aspect of the present invention, a turbocharger system for supplying charge air to a combustion engine, the system comprising a turbocharger including an exhaust gas turbine for being rotationally driven by exhaust gases from the engine and a compressor coupled to the exhaust gas turbine for supplying charge air to the engine, and the system further comprising a hydraulic turbine coupled directly to the turbocharger, a hydraulic system including a reservoir of hydraulic fluid, a pump and means for selectively causing the pump to deliver fluid from the reservoir to the hydraulic turbine to supplement the rotational drive of the turbocharger effected by the supply of engine exhaust gases to the exhaust gas turbine characterised in that the hydraulic turbine is a non-ventilated turbine arranged to operate in submerged conditions; and in that the hydraulic system also includes means for delivering pressurised hydraulic fluid from the reservoir to the turbocharger for lubrication thereof, and further characterised by a combustor coupled in line between the exhaust outlet of the engine and the inlet to the exhaust gas turbine for the passage of engine exhaust gases through the combustor to the exhaust gas turbine, fuel supply means for controllably supplying the fuel to the combustor for combustion therein in accordance with engine operating conditions, and means for selectively bypassing a portion of the turbocharger charge air to flow through the combustor without passing through the engine in accordance with engine operating conditions, and wherein under selected engine operating conditions the rotational drive of the turbocharger is selectively effected or assisted by the supply of pressurised fluid to the hydraulic turbine and/or by the combustion of fuel with bypassed charge air in the combustor.

As in the specification referred to above (EP—A—22678), the hydraulic turbine is non-ventilated to prevent frothing or foaming of the liquid at the high speeds that may be reached, for example, of the order of 100,000 r.p.m. or more. The engine has a hydraulic system including means for supplying hydraulic fluid to the turbocharger for lubrication and the liquid employed for driving the hydraulic turbine comprises a portion of the liquid in the said hydraulic system. Thus, the system may include a low pressure pump supplying liquid for lubrication and a high pressure pump for supplying liquid to drive the hydraulic turbine.

The means for by-passing charge air is controlled in response to engine operating conditions. In particular, it may by-pass charge air prior to starting of the engine but close such supply when the turbocharger reaches self-sustaining operation.

Similarly, the means for supplying fuel to the combustor are dependent upon engine operating conditions. For example, the means for supplying fuel to the combustor may be arranged to do so generally in inverse proportion to engine speed.

In one form of the invention, the by-pass conduit is controlled by a valve responsive to engine operating conditions to close for at least some conditions of engine operation.

Further features and details of the invention will be apparent from the following description of one specific embodiment, given by way of example, with reference to the accompanying drawings in which:—

FIGURE 1 is a schematic diagram illustrating an engine and turbocharger system embodying the present invention;

FIGURE 2 is a vertical section through part of the turbocharger of FIGURE 1;

FIGURE 3 is a perspective view, partially exploded, of a hydraulic turbine and associated hydraulic nozzle forming part of the turbocharger of FIGURES 1 and 2;

FIGURE 4 is a vertical section taken on the line 4—4 of FIGURE 2, showing only part of the turbocharger, to a somewhat reduced scale;

FIGURE 5 is an end view of the hydraulic nozzle, taken on the line 5—5 of FIGURE 3;

FIGURE 6 is a horizontal section taken on the line 6—6 of FIGURE 3;

FIGURE 7 is an enlarged vertical section of the hydraulic nozzle of FIGURE 3; and

FIGURE 8 is an enlarged perspective view of a part of the hydraulic turbine.

The hydraulic assist turbocharger system 10 shown in the drawing is basically similar to those described in co-pending European Application No. 80302380.3 (filed 15th July, 1980 and published January, 1981 under Publication No. 022678A1) and like parts bear corresponding reference numerals. It comprises a turbocharger 12 for supplying relatively high density charge air to a combustion engine 14, such as a two-cycle or a four-cycle internal combustion engine. More specifically, the turbocharger 12 includes a turbine wheel 15 and a compressor wheel 18 respectively received within turbine and compressor housings 20 and 22. The turbine and compressor housing 20 and 22 are interconnected by a centre housing 24 including bearings 26 such as suitable journal and thrust bearings for rotatably supporting a shaft 28 to which the turbine wheel 16 and the compressor wheel 18 are commonly connected.

The turbocharger turbine wheel 16 is rotatably driven by exhaust gases from the engine 14 which are supplied to the turbine wheel via an exhaust manifold 29 and an exhaust conduit 30. If desired, the turbocharger turbine housing 20 and the exhaust manifold 29 and conduit 30 may be adapted for divided, pulse-type operation such as that shown and described in U.S. Patent No. 3,294,364. The rotating turbine wheel 16 rotatably drives the shaft 28 and the compressor wheel 18 whereby the compressor wheel 18 draws in and compresses ambient air. This compressed ambient air comprises charge or boost air for the engine 14, and is supplied to the intake manifold 32 of the engine via a charge air conduit 33. Conveniently, as shown, a charge air cooler heat exchanger 36 may be provided along the conduit 34 to cool the compressed charge air so as to reduce the total heat load of the engine and to further densify the charge air. The relatively high density charge air thus supplied to the engine 14 enables the engine to operate at a relatively high performance and efficiency level.

The engine 14 includes an hydraulic fluid system 38 which is coupled to provide shared hydraulic fluid to the turbocharger for lubrication of the turbocharger bearings 26.

In this preferred embodiment of the invention, the engine hydraulic fluid system 38 comprises an engine oil system, although other types of engine-driven hydraulic system for other purposes are contemplated. As embodied in an engine oil system as shown in the drawing, the hydraulic system 38 includes a reservoir 40 of hydraulic fluid or oil within the engine, and a relatively conventional low pressure oil pump 42 for pumping oil from the reservoir 40 to the engine 14 and the turbocharger 12. More specifically, the oil is pumped through an oil filter 44 and an oil cooler 46, and further to engine components requiring lubrication as indicated by conduit 48.

The oil is also coupled through a supply conduit 50 to the centre housing 24 of the turbocharger 12 for supply to the turbocharger bearings 26 via a network of internal passages (not shown) formed in the centre housing. The oil passes through the bearings 26, typically as by a gravity drain system and is returned to the engine oil reservoir 40 as by a return conduit 54. Accordingly, the bearings 26 of the turbocharger 12 share the hydraulic system 38 with the engine 14 to insure that the turbocharger bearings 26 are properly lubricated at all times.

The turbocharger system 10 includes a non-ventilated hydraulic turbine 56 for supplementally driving the turbocharger compressor wheel 18 during certain modes of engine operation. Thus, during some conditions of engine operation, the engine exhaust gases are incapable of rotatably driving the turbine wheel 16 at a speed sufficient to drive the compressor wheel 18 to supply the engine 14 with sufficient charge air. For example, such engine operating conditions may include relatively low speed, full load conditions wherein the available energy in the exhaust gases is relatively low or relatively low speed acceleration conditions wherein there is insufficient excess charge air available to accommodate rapid transient operating conditions. To ensure that the compressor wheel is sufficiently driven to supply the engine with sufficient quantities of charge air, the turbocharger system includes the non-ventilated hydraulic turbine 56 for selectively and controllably supplementally driving the compressor wheel 18.

The non-ventilated hydraulic turbine 56 is mounted within the center housing 24 directly upon the turbocharger shaft 28 between the sets of bearings 26 rotatably supporting the shaft. The non-ventilated hydraulic turbine 56 is hydraulically driven by high pressure fluid or oil shared from the engine hydraulic system 38. That is, the hydraulic system 38 includes a high pressure pump 58 which may be suitably driven to provide a source of high pressure fluid.

The high pressure pump 58 has its inlet communicating directly with the oil reservoir 40 of the engine hydraulic fluid system 38, and is suitably driven as by electrical means (not shown) or the like for pumping oil at a relatively high pressure through a high pressure supply conduit 60 to a control valve 262. The control valve 262 is suitably operated to couple the high pressure oil flow to the non-ventilated hydraulic turbine 56 via a line 64, or alternatively, to return the output of the high pressure pump 58 to the engine hydraulic system 38 via the bearing supply conduit 50 to substantially unload the pump 58.

As shown, the output of the high pressure pump 58 is returned to the hydraulic system 38 by means of a by-pass return conduit 66 coupled to the bearing supply conduit 50. A one-way relief valve (not shown) may be connected between the high pressure supply conduit 60 and the bearing supply conduit 50 to prevent excessive system oil pressures.

The control valve 262 is controlled in response to operating parameters of the turbocharger system 10 to control the operation of the hydraulic turbine 56. One control scheme for the control valve 62 comprises connection of the valve 262 with the output or discharge pressure of the turbocharger compressor wheel 18 by means (not shown). When compressor discharge pressure is at or above a predetermined minimum threshold, the control valve 262 responds to the pressure to return the output of the high pressure pump 58 to the hydraulic system via the by-pass return conduit 66. In this event, sufficient oil back pressure corresponding with the discharge pressure of the low pressure pump 42 is available in the turbocharger bearing supply conduit 50 to maintain a relatively small oil flow, say on the order of about 3¾ litres (one gallon) per minute to the turbocharger bearings 26 for lubrication purposes. This bearing lubricating oil circulates through the centre housing 24 in communication with the bearings 26 and then returns to the engine oil system 38 via the main return conduit 54.

When compressor discharge pressure falls below the predetermined threshold value, the control valve 262, automatically in response to the pressure, shifts position to couple directly the output of the high pressure pump 58 to the non-ventilated hydraulic turbine 56. That is, high pressure oil is fed into the high pressure supply line 64 which couples the oil to the centre housing 24 for driving supply to the non-ventilated hydraulic turbine 56. The high pressure oil rapidly accelerates the non-ventilated hydraulic turbine 56 correspondingly to accelerate rapidly the turbocharger shaft 28. In this manner, the compressor wheel 18 is rapidly accelerated to increase substantially the pressure level of the compressor discharge charge air. This effectively provides the engine 14 with additional or supplemental charge air to maintain the engine 14 in a high power load carrying state in spite of the inability of the engine exhaust gases to drive adequately the turbocharger turbine wheel 16.

The high pressure oil is circulated through the non-ventilated hydraulic turbine 56 at a relatively high flow rate and pressure, say on the order of up to about 45 litres (twelve gallons) per minute and up to about 110 bars (1600 p.s.i.). This high pressure oil is separated within the centre housing 24 from direct communication with air to prevent foaming. The high pressure oil is also maintained separate from the bearing circulation path to prevent flooding of the bearings 26, and to allow the high pressure oil to flow into communication with the hydraulic turbine 56 at a relatively high flow rate. The oil drains from the non-ventilated hydraulic turbine 56 through a one-way check valve 70 and a drain conduit 72 to the turbocharger bearing supply conduit 50. With this configuration, the oil flow returning to the engine hydraulic system 38 via the conduit 50 is maintained at a sufficient back pressure to ensure a relatively small flow through the bearing oil supply network within the centre housing 24 to maintain bearing lubrication. Of course, the check valve 70 prevents bearing supply flow from communicating with the non-ventilated hydraulic turbine 56 when the turbine 56 is not supplementally driven by high pressure oil.

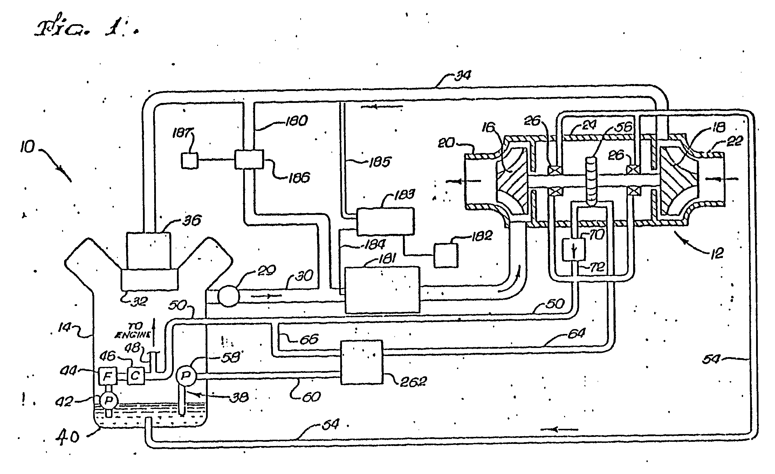

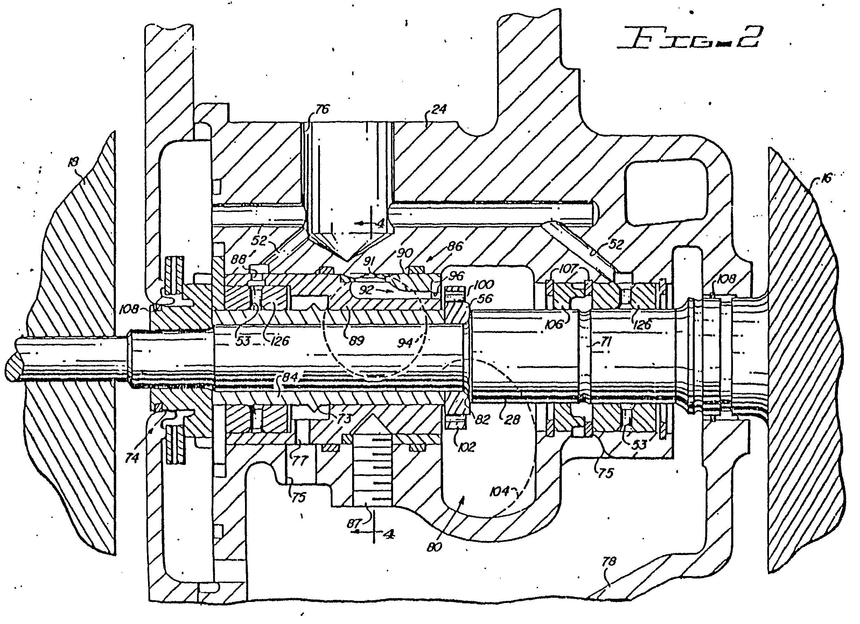

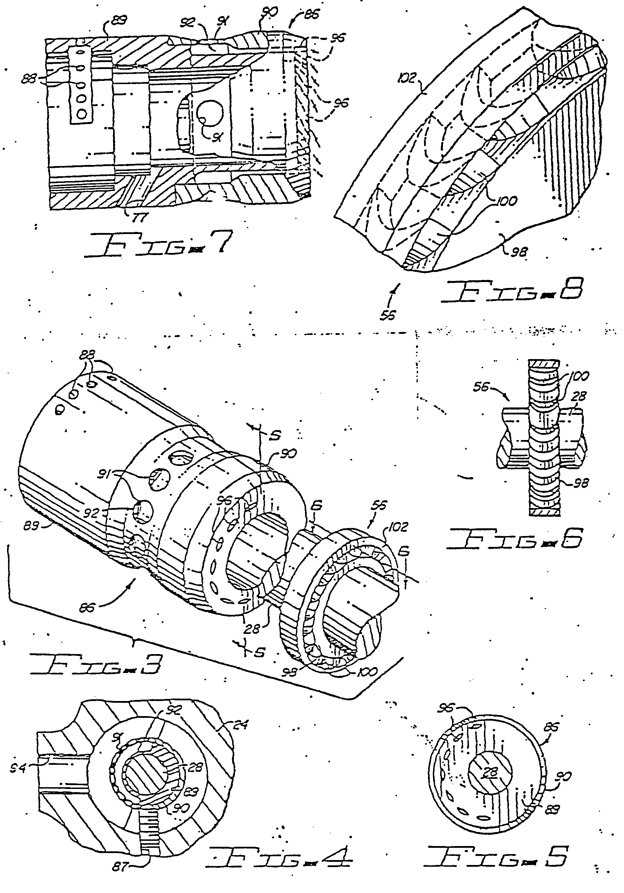

The construction of the turbocharger centre housing 24 and the mounting of the non-ventilated hydraulic turbine 56 therein are shown in detail in FIGURES 2—8.

The bearings 26 supporting the shaft 28 comprise, as shown in FIGURE 2, a thrust bearing assembly 74 and a pair of sleeve-type journal bearings 126. The journal bearings 126 are supplied with lubricating oil through an oil inlet port 76 which is coupled to the bearing supply conduit 50 (not shown in FIGURE 2). The oil supplied to the port 76 is led to the bearings via the internal supply passage network, which is shown at 52, and via holes 53 formed in the bearing sleeves 126. From there, the oil drains gravitationally through openings 75 to the bearing oil return line 54 (not shown in FIGURE 2) via a sump 78.

As shown in FIGURE 2, the hydraulic turbine 56 is carried on the shaft 28 within a flow chamber 80. More specifically, the hydraulic turbine 56 is positioned against a shoulder 82 on the shaft 28, and is held in place by a sleeve 84 which is in turn retained in position by a thrust collar of the thrust bearing assembly 74. This sleeve 84 forms the journal of the left-hand journal bearing 126. The high pressure oil is directed to impinge on the hydraulic turbine 56 by nozzles formed in a generally cylindrical nozzle body 86; a tubular leftwards extension of the nozzle body 86 also forms the housing for the left-hand journal bearing 126. This tubular extension includes holes 88 to permit the flow of lubricating oil to the bearing 126, and a drain opening 77 registering with the adjacent bearing drain opening 75.

The nozzle body 86 has a two-part construction, consisting of an inner portion 89 and an outer portion 90. The inner portion 89 is fixed in position in the centre housing 24 by a set screw 87 and, in this example, is fixed to the outer portion 90 by brazing to define, between the inner and outer portions, a generally semi-annular chamber 92 (see FIGURE 4). The chamber 92 communicates via a plurality of flow openings 91 in the outer portion 90 with a high pressure oil inlet port 94 coupled to the high pressure supply conduit 64 (not shown in FIGURE 2) for receiving high pressure oil. The high pressure oil supplied to the chamber 92 flows out of the chamber 92 via a plurality of nozzles 96 arranged in a semi-circle. As FIGURE 7 shows, these nozzles 96 are all skewed with respect to the axis of the shaft 28, so that the oil discharged from the nozzles impinges on the hydraulic turbine 56 with a circumferential component of velocity. In the present example, the nozzles 96 are angled at about 75° to the axis of the shaft 28.

The hydraulic turbine 56 comprises a central disc 98 and a plurality of blades 100 extending radially outwardly from the disc 98. These blades 100, as shown in FIGURES 3, 6 and 8, have a generally U-shaped configuration, and are so arranged that the angled oil jets from the nozzles 96 impinge on the concave side of the blades 100. A circumferential shroud 102 is formed integrally about the radially outer end of the blades 100 to improve the effect of the oil jets in driving the blades 100.

In operation of the system 10, if the pressure of the charge air supplied by the compressor wheel 18 should drop below the predetermined threshold, high pressure oil will be supplied to the nozzles 96, to drive the hydraulic turbine 56. The oil driving the turbine 56 almost immediately floods the centre housing flow chamber 80 so that the hydraulic turbine 56 operates in a non-ventilated flooded environment. Thus, foaming of frothing of the oil is not possible. The oil leaves the chamber 80 via an outlet port 104 coupled to the bearing oil supply line 50 (FIGURE 1). The relative sizes of the inlet and outlet ports 94 and 104, together with the back pressure on the chamber 80 resulting from the presence of low pressure oil in conduit 50 ensure substantially immediate flooding of the flow chamber 80 when the turbine 56 is brought into operation. The air in the flow chamber 80 is forced by the incoming flooding oil outwardly from the chamber 80 in both directions along the shaft 28. That is, the air forced between the sleeve 84 and the nozzle body 86 for escape through the drain openings 75 and 77, and in the other direction past a divider ring 106 secured in position by retaining rings 107, for escape through the other drain opening 75. During supply of high pressure oil to the non-ventilated hydraulic turbine 56, some oil may leak from the flow chamber 80 in both directions along the shaft 28. To deal with this leakage, the sleeve 84 includes a slinger 73 aligned with the drain openings 75 and 77 for radially pumping any such leaking oil through the openings 75 and 77 to the sump 78. Similarly, a slinger contour 71 is formed on the shaft 28, between the divider ring 106 and the right-hand bearing sleeve 126 and pumps any leaking oil through the adjacent drain opening 75 to the sump 78. Both the slinger 73 and the slinger contour 71 are positioned inboard of the journal bearings 126, so as to guard against flooding of these bearings.

When the high pressure oil flow to the hydraulic turbine 56 ceases, the remaining oil in the flow chamber 80 is rapidly pumped out of the chamber, to allow the turbine 56 to freewheel with the turbocharger shaft 28 without significant resistance losses. More specifically, the oil remaining in the chamber 80 is pumped out of the chamber in both directions along the shaft 28 toward the journal bearings 126 by the spinning action of the shaft 28 and the hydraulic turbine 56, still without contacting the turbocharger bearings 126. Accordingly, during all conditions of operation, the turbocharger journal bearings 126 and the thrust bearing assembly 74 are lubricated solely by the oil supplied via the passage network 52. Seal rings 108 are positioned at opposite ends of the shaft 28 to prevent any of this oil from leaking into either the turbine housing 20 or the compressor housing 22.

In accordance with the present invention, an auxiliary combustor 181 is included in the exhaust conduit 30 and the control valve 262 is controlled for supplying high pressure oil to the non-ventilated hydraulic turbine 56 whenever it is desired to start the combustion engine 14. That is, for starting of the engine 14, the control valve 262 couples the high pressure oil to the hydraulic turbine 56 to initiate rotation of the turbine 56, and the turbocharger turbine wheel 16 and compressor wheel 18. If desired, the control valve 262 may include means for simultaneously initiating operation of the high pressure pump 58. Alternatively high pressure oil for starting purposes may be obtained from a high pressure oil accumulator.

The hydraulically driven turbocharger 12 supplies compressed air, or charge air, from the compressor wheel 18 to the charge air conduit 34 for supply of charge air to the intake manifold 32 of the engine 14. However, prior to starting of the engine 14, flow of the charge air through the engine for combustion purposes is not possible. In this pre-starting condition, the charge air is supplied through a by-pass conduit 180 directly to the engine exhaust conduit 30 upstream of the turbocharger turbine wheel 16 and the auxiliary combustor 181.

The auxiliary combustor 181 is supplied with fuel from a fuel supply 182 through a scheduling fuel control 183 via a fuel line 184. The fuel and the by-pass charge air are ignited within the combustor 181 by suitable ignition means (not shown) to yield a substantial and continuous combustor flame for supplying substantial high energy exhaust gases for rotatably driving the turbine wheel 16 of the turbocharger 12.

The specific construction details of the combustor 181 and fuel injector means therefor, and the fuel control 183 are not described in detail herein, but components generally as described and shown in DE—A—2849945, published 5th July, 1979 can be used.

In operation, the auxiliary combustor 181 is supplied with fuel appropriately to accelerate the turbine wheel 16 to a substantial rotational speed. This correspondingly accelerates the compressor wheel 18 to a relatively high rotational speed for supply of a substantial quantity of charge air to the auxiliary combustor 181 for combustion. As soon as a desired minimum charge air pressure level is reached, the engine 14 may be started. Starting of the engine ingests a portion of the charge air for ignition with fuel to provide exhaust gases for passage through the exhaust conduit 30 and the combustor 181 for rotatably driving the turbine wheel 16.

As can be seen the hydraulically driven turbine wheel 56 together with the auxiliary combustor 181 provide means for making available charge air at sufficient quantity and pressure for starting the engine 14. This system is particularly suited for use with a low compression engine wherein charge air at elevated pressure is a pre-requisite for the engine to reach self-sustaining operation upon starting. The high pressure control valve 262 is operated to cease supply of high pressure oil to the hydraulic turbine 56 as soon as the auxiliary combustor 181 accelerates the turbocharger turbine wheel 16 to a speed sufficient to supply the combustor 181 with sufficient charge air for self-sustained operation. If desired, the high pressure oil is then available for driving an hydraulic motor for operating a fan for use in cooling the charge air in a charge air heat exchanger. However, this arrangement is not specifically included in the drawing for purposes of clarity.

Once the engine 14 is started, the auxiliary combustor 181 may be shut down by virtue of discontinuing fuel supply thereto, whereupon the engine 14 will operate as a conventional turbocharged engine with exhaust gases therefrom flowing freely through the combustor. However, if desired, the auxiliary combustor 181 may be suitably controlled to supplementally drive the turbocharger 12 at relatively low speed engine operating conditions to maintain the engine in a relatively high load-carrying state. That is, the fuel control 183 may be suitably scheduled in accordance with engine operating conditions as by a charge air pressure conduit 185 coupled to the charge air supply conduit 34. The fuel control 183 responds to this parameter to provide a relatively high fuel flow to the combustor 181 at relatively low engine speed, and to reduce progressively the fuel flow with increases in engine speed to supplement the energy level of gases supplied to the turbine wheel 16 in accordance with engine load-carrying requirements.

The by-pass conduit 180 includes by-pass valve means 186 comprising a check valve for the preventing reverse flow from the exhaust conduit 30 to the charge air supply conduit 34. The by-pass valve means 186 also includes a closure valve for selectively closing the by-pass conduit 180 to charge air flow. This closure valve is opened by a suitable valve operator 187 for supply of charge air to the combustor 181 for initiation of combustor combustion. The closure valve is also retained open throughout relatively low speed engine operation to allow a portion of the charge air to by-pass to the combustor 181 for use in supplementing the energy level of gases supplied to the turbocharger. However, at relatively high engine speed, the closure valve is closed to prevent by-pass of charge air to the combustor 181 whereby all of the air is supplied to the engine. Importantly, at high engine speed, supplemental driving of the turbocharger is not required, and the oxygen content of engine exhaust gases is sufficient to maintain when desired, a pilot flame in the combustor 181.

The valve operator 187 may be manually controlled, or may be automatically controlled in response to engine operating parameters such as charge air pressure, etc. Alternatively, if desired, the valve operator 187 and the closure valve may be omitted by appropriately sizing the turbocharger 12 to match engine air flow consumption requirements. That is, the volumetric intake requirements of the engine are proportional to engine speed. With a turbocharger designed generally to match engine air intake flow requirements at relatively high engine speed, by-pass air becomes unavailable for by-pass flow directly to the combustor 181 at relatively high engine speed by virtue of the engine ingesting all of the supplied charged air. However, at lower engine speeds, the engine fails to ingest or require the total volume of supplied charge air flow, whereby an excess portion of the charge air flow becomes available for by-pass to the combustor 181. Importantly, the combustion system using either the closure valve or requiring a matching of the turbocharger to engine air flow requirements is discussed in more detail in DE—A—2849945 referred to above.

Various modifications and improvements to the invention set forth herein are believed to be possible within the scope of the art. For example, a variety of control schemes for the control valve 262 are possible, including the electronic systems and the like responsive to one or more engine and/or turbocharger operating parameters. Moreover, the invention is adaptable for use with conventional four-cycle internal combustion engines, or with two-cycle internal combustion engines. With two-cycle engines, the control scheme for the control valve 262 may be designed so as to supplementally drive the turbocharger in a manner allowing elimination of the conventional scavenging blower. Further the control valve 262 may be adapted to be capable of three-position operation to effect (a) driving of the non-ventilated hydraulic turbine 56, (b) driving of a fan for cooling the charge air, or (C) unloading of the high pressure oil pump 58.

FIGURE 9 of the aforesaid European Application No. 80302380.3 (EP—A—22678) and the relevant description thereof give details of an arrangement of charge air cooling heat-exchanger and associated fan, and can be deemed to be a part of this specification.

**Claims**

1. A turbocharger system (10) for supplying charge air to a combustion engine (14) the system comprising a turbocharger (12) including an exhaust gas turbine (16) rotationally driven by exhaust gases from the engine and a compressor coupled to the exhaust gas turbine for supplying charge air to the engine, and the system further comprising a hydraulic turbine (56) coupled directly to the turbocharger (12), a hydraulic system (38) including a reservoir (40) of hydraulic fluid, a pump (58) and means (262) for selectively causing the pump to deliver fluid from the reservoir to the hydraulic turbine to supplement the rotational drive of the turbocharger (12) effected by the supply of engine exhaust gases to the exhaust gas turbine (16) characterised in that the hydraulic turbine is a non-ventilated turbine (56) arranged to operate in submerged conditions; and in that the hydraulic system (38) also includes means (42, 50) for delivering pressurised hydraulic fluid from the reservoir (40) to the turbocharger (12) for lubrication thereof; and further characterised by a combustor (181) coupled in line between the exhaust outlet of the engine (14) and the inlet to the exhaust gas turbine (16) for the passage of engine exhaust gases through the combustor to the exhaust gas turbine, fuel supply means (182, 183, 184) for controllably supplying the fuel to the combustor for combustion therein in accordance with engine operating conditions, and means (186, 187) for selectively by-passing a portion of the turbocharger charge air to flow through the combustor (181) without passing through the engine (14) in accordance with engine operating conditions; and wherein under selected engine operating conditions the rotational drive of the turbocharger is selectively effected or assisted by the supply of pressurised fluid to the hydraulic turbine and/or by the combustion of fuel with by-passed charge air in the combustor.

2. A turbocharger system as claimed in Claim 1 in which the said means (262) for causing pressurised fluid to be delivered to the hydraulic turbine is arranged to deliver pressurised fluid thereto to initiate the rotational drive of the turbocharger whereby by-pass air will be supplied to the combustor prior to the starting of the engine, and to cease circulation of pressurised fluid to the hydraulic turbine when the combustor and turbocharger reach self-sustaining operating.

3. A turbocharger system as claimed in Claim 1 or 2 in which the by-pass valve means (186, 187) is arranged to open the by-pass conduit (180) for delivery of charge air to the combustion chamber (181) prior to the starting of the engine and at relatively low engine speeds, and to close the by-pass conduit when the engine reaches a relatively high speed.

4. A turbocharger system as claimed in Claim 1 or Claim 2 in which the by-pass means comprises an open by-pass conduit incorporating a check valve to prevent the reverse flow of exhaust gas through it, and in which the turbocharger (12) is sized to provide charge air flow generally matching engine air flow consumption requirements at relatively high speed engine operation whereby the charge air for by-passing by the by-pass means is unavailable due to engine consumption when the engine is operating at relatively high speed.

5. A system as claimed in any one of the preceding claims including a low pressure pump (42) supplying hydraulic fluid at low pressure through the lubrication conduit (50) for lubrication of the turbocharger and a high pressure pump (58) for supplying hydraulic fluid at high pressure through the separate high pressure supplying conduit to drive the hydraulic turbine (16) and including further valve means (262) for selectively opening and closing the supply of fluid from the high pressure pump to the hydraulic turbine.

6. A system as claimed in any of the preceding claims in which the means for supplying fuel to the combustor is arranged to do so generally in inverse proportion to engine speed.

7. A system as claimed in Claim 5 including a charge air heat exchanger for cooling the charge air between the compressor (18) and the engine (14), and including a fan for forcing ambient air through the heat exchanger and a hydraulic motor driving the fan, the said further valve means (262) controlling the supply of high-pressure fluid from the high-pressure pump (58) alternatively to the hydraulic turbine (56) or the said hydraulic motor.

8. A system as claimed in Claim 5 or Claim 6 or 7 when dependent on Claim 5, in which the exhaust gas turbine (16), the hydraulic turbine (56) and the compressor (18) are mounted on a common shaft (28) and in which the turbine wheel of the exhaust gas turbine (16) is mounted within a turbine housing (20), the wheel of the compressor (18) is mounted within a compressor housing (22) and between the turbine housing and the compressor housing there is a central housing (24) including bearings (26, 126 Fig. 2) supporting the shaft (28), the low pressure pump (42) supplying low pressure fluid through a low-pressure conduit (50) to the central housing (24) to lubricate the said bearings, and the hydraulic turbine (56) being mounted in the central housing.

9. A system as claimed in Claim 8 in which the central housing (24) includes a turbine flow chamber (80) containing the turbine wheel (82) of the hydraulic turbine (56) and having inlet port means (96) communicating with the high-pressure fluid supply from the high-pressure pump (58) and having an outlet port (104) communicating with the low-pressure conduit (50) so that a back pressure is applied to the said flow chamber (80) to cause substantially immediate flooding of the flow chamber when high-pressure fluid is supplied to drive the hydraulic turbine (56) so that the latter operates submerged in the non-ventilated environment.

10. A system as claimed in Claim 9 including means on the shaft for pumping air from the flow chamber when high pressure fluid is supplied thereto and for pumping fluid from the flow chamber when supply of the high-pressure fluid ceases.

11. A turbocharger system as claimed in Claim 1 characterized in that the hydraulic turbine (56) comprises a nozzle structure (86) and a rotary bladed turbine wheel (98, 100) which is arranged for rotation within a closed flow chamber (80), the pump (58) being arranged to deliver high-pressure hydraulic fluid from the reservoir (40) through a high-pressure supply conduit (60, 64) to the nozzle structure (86) to selectively drive the bladed turbine wheel (98, 100), and the means (42, 50) for delivering pressurised hydraulic fluid from the reservoir (40) to the turbocharger (12) for lubrication thereof comprising a low-pressure pump (42) arranged to deliver low-pressure hydraulic fluid through a lubrication supply conduit (50) separate from the high-pressure supply conduit (60, 64), and the flow chamber (80) having an outlet port (104) communicating via a check valve (70) with the lubrication supply conduit (50) whereby when high-pressure fluid from the pump (58) is supplied to the nozzle structure (86) to drive the turbine wheel (98, 100) a back pressure derived from the low pressure in the lubrication supply conduit means (50) is established in the flow chamber (80) causing the substantially immediate flooding of the flow chamber so that the turbine wheel (98, 100) rotates submerged in the non-ventilated environment in the flow chamber (80).

12. A turbocharger system as claimed in Claim 11 characterised in that the exhaust gas turbine (16) and the compressor (18) of the turbocharger (12) are mounted on opposite sides of a central turbocharger housing (24) with their turbine and compressor wheels mounted on a common shaft (28) extending through and journalled in bearings (126) carried by the central housing (24).

13. A turbocharger system as claimed in Claim 11 or Claim 12 characterised in that the hydraulic system (38) includes a return conduit means (54) for returning used low-pressure lubricating fluid from the central housing (24) to the reservoir (40) for recirculation.

14. A turbocharger system as claimed in any of Claims 11—13 arranged so that on termination of the delivery of hydraulic fluid to the flow chamber the continued rotation of the shaft and hydraulic turbine wheel causes fluid to be pumped out of the flow chamber.

15. A method of operating a turbocharger system as claimed in any preceding claim which includes supplying hydraulic fluid at a relatively high pressure from the hydraulic system (38) to the hydraulic turbine (56) prior to starting of the engine (14) to drive the hydraulic turbine (56) fully submerged and thereby to drive the compressor (18) and provide a charge air output supplying at least part of the said charge air output to the combustor (181), supplying fuel to the combustor (181) to produce combustion with the supplied charge air to provide high energy exhaust gases, and supplying the said gases to the exhaust gas turbine (16) for accelerating it to self-sustaining operation and starting the engine (14).

16. A method as claimed in Claim 15 which includes at relatively low-speed engine operating conditions by-passing a portion of the charge air flow around the engine (14) to the combustor (181) for combustion with fuel therein to supplement the energy level of gases flowing through the combustor.

17. A method as claimed in Claim 16 which includes controlling the by-passed charge air flow with a by-pass valve (186, 187) and closing the said by-pass valve (186) at relatively high speed engine operating conditions.

18. A method as claimed in Claim 16 in which the by-passing step comprises sizing the turbocharger (12) generally to match the engine charge air flow consumption requirements at relatively high speed engine operation, whereby by-pass flow is unavailable at the said high operating speed.

19. A method as claimed in any one of Claims 15—18 which includes ceasing to supply high pressure liquid from the hydraulic system (38) to the hydraulic turbine (56) when the combustor (181) and turbocharger (12) reach self-sustaining operation.

20. A method as claimed in Claim 19 which includes supplying the high pressure fluid to operate a fan for forcing ambient air across a charge air heat exchanger to cool the charge air prior to its supply to the engine.

**Patentansprüche**

1. Turboladeranlage (10) für die Zufuhr von Ladeluft zu einer Verbrennungskraftmaschine (14), welche Anlage einen Turbolader (12) mit einer Auspuffgasturbine (16) aufweist, die durch die Auspuffgase des Motors drehangetrieben ist, und einen an die Auspuffgasturbine angekuppelten Kompressor für die Zufuhr von Ladeluft zum Motor, und die Anlage weiters eine direkt an den Turbolader (12) angekuppelte Hydraulikturbine (56) und ein Hydrauliksystem (38) mit einem Vorratsbehälter (40) für Hydraulikflüssigkeit, eine Pumpe (58) und Mittel (262) aufweist, welche die Pumpe wahlweise veranlassen, Flüssigkeit aus dem Vorratsbehälter zur Hydraulikturbine zu fördern, um den vom Turbolader (12) durch die Zufuhr von Auspuffgasen zu der Auspuffgasturbine (16) bewirkten Drehantrieb zu unterstützen, dadurch gekennzeichnet, daß die Hydraulikturbine eine unbelüftete Turbine (56) ist, angeordnet zum Arbeiten in untergetauchtem Zustand, und daß das Hydrauliksystem (38) auch Mittel (42, 50) für die Förderung von unter Druck gesetzter Hydraulikflüssigkeit vom Vorratsbehälter (40) zum Turbolader (12) für dessen Schmierung enthält, und ferner gekennzeichnet durch einen Brenner (181), der in die zwischen dem Auspuffauslaß des Motors (14) und dem Einlaß zur Auspuffgasturbine (16) verlaufende Leitung eingeschaltet ist, zwecks Durchgang von Auspuffgasen durch den Brenner zur Auspuffgasturbine, durch Kraftstoff-Versorgungsmittel (182, 183, 184) für gesteuerte Zufuhr des Kraftstoffes zum Brenner für die Verbrennung darin in Einklang mit Motor-Betriebsbedingungen und durch Mittel (186, 187) für die wahlweise Führung eines Teiles des Turbolader-Ladeluftstroms durch den Brenner (181) über einen Bypaß ohne Hindurchtreten durch den Motor (14) in Einklang mit Motorbetriebsbedingungen, wobei unter ausgewählten Motorbetriebsbedingungen der Drehantrieb des Turboladers, wahlweise durch die Zufuhr von Druckflüssigkeit zur Hydraulikturbine und/oder durch die Verbrennung von Kraftstoff mit durch den Bypass geführter Ladeluft im Brenner, bewirkt oder unterstützt wird.

2. Turboladeranlage nach Anspruch 1, in welcher die Mittel (262), welche bewirken, daß Druckflüssigkeit zur Hydraulikturbine gefördert wird, für die Förderung von Druckflüssigkeit dorthin in der Weise vorgesehen sind, daß sie den Drehantrieb des Turboladers einleiten, wodurch durch den Bypass strömende Luft vor dem Starten des Motors zum Brenner gefördert wird, und die Zirkulation der Druckflüssigkeit zur Hydraulikturbine beenden, wenn Brenner und Turbolader Selbstlaufbetrieb erreichen.

3. Turboladeranlage nach Anspruch 1 oder 2, in welcher die Bypass-Ventilelemente (186, 187) so vorgesehen sind, daß sie für ein Öffnen der Bypassleitung (180) für die Zufuhr von Ladeluft zur Brennkammer (181) vor dem Starten des motors und bei relativ niedrigen Motorgeschwindigkeiten sorgen und für ein Schließen der Bypassleitung sorgen, wenn der Motor eine relativ hohe Geschwindigkeit erreicht.

4. Turboladeranlage nach Anspruch 1 oder 2, in welcher die Bypasselemente eine offene Bypassleitung umfassen, welche ein Rückschlagventil zum Verhindern von Rückströmung von Auspuffgas hierdurch enthält, und in welcher der Turbolader (12) so bemessen ist, daß er eine Ladeluftströmung bereitstellt, die den Luftströmungsbedarfserfordernissen des Motors bei Motorbetrieb mit relativ hoher Geschwindigkeit im wesentlichen angepaßt ist, wodurch die Ladeluft dür das Überströmen durch die Bypasselemente wegen des Motorbedarfes bei Lauf des Motors mit relativ hoher Geschwindigkeit nicht verfügbar ist.

5. Anlage nach einem der vorhergehenden Ansprüche, mit einer Niederdruckpumpe (42), die Hydraulikflüssigkeit unter niedrigem Druck durch die Schmierleitung (50) für die Schmierung des Turboladers fördert, und mit einer Hochdruckpumpe (58), die Hydraulikflüssigkeit unter hohem Druck durch die gesonderte Hochdruckleitung zum Antrieb der Hydraulikturbine (56) fördert, und weiters mit Ventilelementen (262) für ein wahlweises Öffnen und Schließen der Zufuhr von der Hochdruckpumpe zur Hydraulikturbine.

6. Anlage nach einem der vorhergehenden Ansprüche, in welcher die Mittel für die Zufuhr von Kraftstoff zum Brenner so vorgesehen sind, daß sie diese Zufuhr im wesentlichen im umgekehrten Verhältnis zur Motorgeschwindigkeit bewirken.

7. Anlage nach Anspruch 5, mit einem Ladeluft-Wärmetauscher für die Kühlung der Ladeluft zwischen dem Kompressor (18) und dem Motor (14), mit einem Gebläse für ein Hindurchdrücken von Umgebungsluft durch den Wärmetauscher und mit einem das Gebläse antreibenden Hydraulikmotor, wobei die weiteren Ventilelemente (262) die Lieferung von Hochdruckflüssigkeit von der Hochdruckpumpe (58) entweder zur Hydraulikturbine (56) oder zum Hydraulikmotor steuern.

8. Anlage nach Anspruch 5, 6 oder 7, wenn abhängig vom Anspruch 5, in welcher die Auspuffgasturbine (16), die Hydraulikturbine (56) und der Kompressor (18) auf einer gemeinsamen Welle (28) befestigt sind und in welcher das Turbinenlaufrad der Auspuffgasturbine (16) in einem Turbinengehäuse (20) und das Laufrad des Kompressors (18) in einem Kompressorgehäuse (22) angeordnet ist und zwischen Turbinengehäuse und Kompressorgehäuse ein Zentralgehäuse (24) mit Lagern (26, 126, Fig. 2) angeordnet ist, welche die Welle (28) tragen, wobei die Niederdruckpumpe (42) Niederdruckflüssigkeit durch eine Niederdruckleitung (50) zum Zentralgehäuse (24) für die Schmierung der Lager fördert, und wobei die Hydraulikturbine (56) im Zentralgehäuse angeordnet ist.

9. Anlage nach Anspruch 8, in welchem das Zentralgehäuse (24) eine Turbinen-Strömungskammer (80) aufweist, in welcher sich das Turbinenlaufrad (82) befindet und welche Einlaßöffnungselemente (96) besitzt, die mit der Hochdruckflüssigkeitszufuhr von der Hochdruckpumpe (58) in Verbindung stehen, sowie eine Auslaßöffnung (104), die mit der Niederdruckleitung (50) in Verbindung steht, so daß in der Strömungskammer (80) ein Gegendruck herrscht, der ein im wesentlichen sofortiges Fluten der Strömungskammer bewirkt, wenn Hochdruck zum Antrieb der Hydraulikturbine (56) zugeführt wird, so daß letztere untergetaucht in der unbelüfteten Umgebung arbeitet.

10. Anlage nach Anspruch 9, mit auf der Welle befindlichen Mitteln für das Pumpen von Luft aus der Strömungskammer, wenn Hochdruckflüssigkeit dorthin zugeführt wird, und für das Pumpen von Flüssigkeit aus der Strömungskammer, wenn die Zufuhr von Hochdruckflüssigkeit aufhört.

11. Turboladeranlage nach Anspruch 1, dadurch gekennzeichnet, daß die Hydraulikturbine (56) eine Düsenanordnung (86) umfaßt sowie ein drehbares, mit Schaufeln bestücktes Turbinenlaufrad (98, 100), welches für die Rotation in einer geschlossenen Strömungskammer (80) untergebracht ist, wobei die Pumpe (58) zur Förderung von Hochdruck-Hydraulikflüssigkeit vom Vorratsbehälter (40) durch eine Hochdruck-Zuführleitung (60, 64) zur Düsenanordnung (86) vorgesehen ist, um das mit Schaufeln versehene Turbinenlaufrad (98, 100) wahlweise anzutreiben, und wobei die Mittel (42, 50) für die Förderung von Druckhydraulikflüssigkeit vom Vorratsbehälter (40) zum Turbolader (12) für dessen Schmierung eines Niederdruckpumpe (42) umfaßt, welche für die Förderung von Niederdruck-Hydraulikflüssigkeit durch eine Schmierversorgungsleitung (50), getrennt von der Hochdruckversorgungsleitung (60, 64) vorgesehen ist, und daß die Strömungskammer (80) eine Auslaßöffnung (104) aufweist, die über ein Rückschlagventil (70) mit der Schmierversorgungsleitung (50) in Verbindung steht, wodurch dann, wenn Hochdruckflüssigkeit von der Pumpe (58) für den Antrieb des Turbinenlaufrades (98, 100) der Düsenanordnung (86) zugeführt wird, sich in der Strömungskammer (80) ein vom Niederdruck in den Schmierversorgungsleitungselementen (50) herrührender Gegendruck einstellt, der das im wesentlichen sofortige Fluten der Strömungskammer verursacht, so daß sich das Turbinenlaufrad (98, 100) untergetaucht in der unbelüfteten Umgebung in der Strömungskammer (80) dreht.

12. Turboladeranlage nach Anspruch 11, dadurch gekennzeichnet, daß die Auspuffgasturbine (16) und der Kompressor (18) des Turboladers (12) auf gegenüberliegenden Seiten eines zentralen Turboladergehäuses (24) angeordnet sind, und zwar mit ihrem Turbinen- bzw. Kompressorlaufrad auf einer gemeinsamen Welle (28), die sich durch das Zentralgehäuse (24) erstreckt und in von diesem getragenen Lagern (126) radial gelagert ist.

13. Turboladeranlage nach Anspruch 11 oder 12, dadurch gekennzeichnet, daß das Hydrauliksystem (38) ein Rückleitungselement (54) zum Zwecke der Rezirkulation für die Rückführung gebrachter Niederdruckschmierflüssigkeit vom Zentralgehäuse (24) zum Vorratsbehälter (40) aufweist.

14. Turboladeranlage nach einem der Ansprüche 11 bis 13, mit einer derartigen Anordnung, daß bei Beendigung der Zufuhr von Hydraulikflüssigkeit zur Strömungskammer die fortdauernde Rotation der Welle und des Laufrades der Hydraulikturbine bewirkt, daß die Flüssigkeit aus der Strömungskammer gepumpt wird.

15. Verfahren zum Betrieb einer Turboladeranlage nach einem der vorhergehenden Ansprüche, welches die Zufuhr von Hydraulikflüssigkeit von relativ niedrigem Druck vom Hydrauliksystem (38) zur Hydraulikturbine (56) vor dem Starten des Motors (14) umfaßt, um die Hydraulikturbine (56) vollständig untergetaucht anzutreiben und dadurch den Kompressor (18) anzutreiben, um einen Ladeluftausstoß zu bewirken, unter wenigstens teilweiser Zufuhr dieses Ladeluftausstoßes zum Brenner (181), und welches weiters das Zuführen von Kraftstoff zum Bremmer (181) umfaßt, um mit der zugeführten Ladeluft zur Erzeugung von Hochenergie-Auspuffgasen eine Verbrennung herbeizuführen, und das Zuführen dieser Gase zur Auspuffgasturbine (16) für deren Beschleunigung auf Selbstlaufbetrieb, und schließlich das Starten des Motors (14).

16. Verfahren nach Anspruch 15, welches bei Motorbetriebsbedingungen unter relativ niedriger Geschwindigkeit das Führen eines Teiles des Ladeluftstromes durch einen Bypass, am Motor (14) vorbei zum Brenner (181) für eine Verbrennung mit Kraftstoff darin, einschließt, um den Energiepegel der durch den Brenner strömenden Gase zu ergänzen.

17. Verfahren nach Anspruch 16, welches das Steuern des durch den Bypass gehenden Ladeluftstromes mit einem Bypassventil (186, 187) umfaßt sowie das Schließen des Bypassventils (186) bei Motorbetriebsbedingungen unter relativ hoher Geschwindigkeit.

18. Verfahren nach Anspruch 16, in welchem der Bypass-Schritt eine solche Einstellung des Turboladers (12) umfaßt, welche im wesentlichen den Erfordernissen des Ladeluftstromverbrauches des Motors bei Motorbetrieb unter relativ hoher Geschwindigkeit angepaßt ist, wodurch der Bypassstrom bei diesem Hochgeschwindigkeitsbetrieb unverfügbar ist.

19. Verfahren nach einem der Ansprüche 15 bis 18, welches das Abstellen der Zufuhr von Hochdruckflüssigkeit vom Hydrauliksystem (38) zur Hydraulikturbine (56) einschließt, wenn Brenner (181) und Turbolader (12) Selbstlaufbetrieb erreichen.

20. Verfahren nach Anspruch 19, welches die Zufuhr der Hochdruckflüssigkeit zum Betreiben eines Gebläses einschließt zum Pressen von Umgebungsluft über einen Ladeluftwärmetauscher für das Kühlen der Ladeluft vor deren Zuleitung zum Motor.

**Revendications**

1. Système de suralimentation par turbocompresseur (10) destiné à fournir de l'air de suralimentation à un moteur à combustion interne (14) et comprenant un turbocompresseur de suralimentation (12) comprenant une turbine à gaz d'échappement (16) entraînée en rotation par des gaz d'échappement du moteur et un compresseur couplé à la turbine à gaz d'échappement pour fournir de l'air de suralimentation au moteur, ainsi qu'une turbine hydraulique (56) couplée directement au turbocompresseur de suralimentation (12), un circuit hydraulique (38) comprenant un réservoir (40) de liquide hydraulique, une pompe (58) et un dispositif (262) pour amener sélectivement la pompe à refouler du liquide à partir du réservoir vers la turbine hydraulique en vue de renforcer l'entraînement en rotation du turbocompresseur (12) assuré par la fourniture de gaz d'échappement du moteur à la turbine à gaz d'échappement (16), caractérisé en ce que la turbine hydraulique est une turbine non ventilée (56) propre à fonctionner dans des conditions submergées et le circuit hydraulique (38) comprend également un dispositif (42, 50) pour refouler du liquide hydraulique sous pression à partir du réservoir (40) vers le turbocompresseur (12) en vue de le lubrifier, et en ce qu'un brûleur (181) est raccordé en ligne entre la sortie des gaz d'échappement du moteur (14) et l'entrée de la turbine à gaz d'échappement (16) pour permettre aux gaz d'échappement de traverser le brûleur en direction de la turbine à gaz d'échappement, un dispositif d'alimentation en combustible (182, 183, 184) est prévu pour fournir le combustible de façon réglable au brûleur en vue de sa combustion dans ce brûleur en fonction des conditions de fonctionnement du moteur, et un dispositif (186, 187) est prévu pour dériver sélectivement une fraction de l'air de suralimentation du turbocompresseur à travers le brûleur (181) sans le faire passer à travers le moteur (14) en fonction des conditions de fonctionnement du moteur, étant entendu que dans des conditions de fonctionnement choisies du moteur, l'entraînement en rotation du turbocompresseur est sélectivement assuré ou assisté par la fourniture de liquide sous pression à la turbine hydraulique et/ou par la combustion de combustible avec de l'air de suralimentation dérivé dans le brûleur.

2. Système de suralimentation par turbocompresseur suivant la revendication 1, dans lequel le dispositif (262) destiné à alimenter la turbine hydraulique en liquide sous pression est conçu pour refouler du liquide sous pression vers cette turbine en vue d'amorcer l'entraînement en rotation du turbocompresseur de suralimentation, de telle sorte que de l'air de dérivation soit fourni au brûleur avant le démarrage du moteur, et pour faire cesser la circulation de liquide sous pression vers la turbine hydraulique lorsque le brûleur et le turbocompresseur atteignent des conditions de fonctionnement autonome.

3. Système de suralimentation par turbocompresseur suivant la revendication 1 ou 2, dans lequel la valve de dérivation (186, 187) est conçue pour ouvrir la conduite de dérivation (180) en vue de fournir de l'air de suralimentation à la chambre de combustion (181) avant le démarrage du moteur et à des régimes relativement peu élevés du moteur, et pour fermer la conduite de dérivation lorsque le moteur atteint un régime relativement élevé.

4. Système de suralimentation par turbocompresseur suivant la revendication 1 ou 2, dans lequel le dispositif de dérivation comprend une conduite de dérivation ouverte contenant une valve de retenue destinée à empêcher un reflux des gaz d'échappement dans cette conduite, et le turbocompresseur de suralimentation (12) est calibré de manière à fournir un débit d'air de suralimentation correspondant d'une manière générale aux besoins en air du moteur à une régime relativement élevé, étant entendu que l'air de suralimentation destiné à être dérivé par le dispositif de dérivation n'est par disponible en raison de la consommation du moteur lorsque ce moteur fonctionne à un régime relativement élevé.

5. Système suivant l'une quelconque des revendications précédentes comprenant une pompe à basse pression (42) refoulant du liquide hydraulique à basse pression dans la conduite de lubrification (50) en vue de lubrifier le turbocompresseur et une pompe à haute pression (58) refoulant du liquide hydraulique à haute pression dans la conduite d'alimentation à haute pression distincte en vue d'entraîner la turbine hydraulique (16) et comprenant une autre valve (262) destinée à ouvrir et à fermer sélectivement l'alimentation de liquide allant de la pompe à haute pression vers la turbine hydraulique.

6. Système suivant l'une quelconque des revendications précédentes, dans lequel le dispositif destiné à fournir du combustible au brûleur est conçu pour débiter du combustible dans une mesure en général inversement proportionnelle au régime du moteur.

7. Système suivant la revendication 5 comprenant un échangeur de chaleur d'air de suralimentation destiné à refroidir l'air de suralimentation entre le compresseur (18) et le moteur (14) et comprenant un ventilateur pour refouler de l'air ambiant à travers l'échangeur de chaleur et un moteur hydraulique entraînant le ventilateur, l'autre valve (262) commandant l'alimentation de liquide à haute pression depuis la pompe à haute pression (58) soit vers la turbine hydraulique (56) soit vers l'moteur hydraulique.

8. Système suivant la revendication 5 ou 6 ou 7 découlant de la revendication 5, dans lequel la turbine à gaz d'échappement (16), la turbine hydraulique (56) et le compresseur (18) sont montés sur un arbre commun (28) et la roue de turbine de la turbine à gaz d'échappement (16) est montée dans un carter de turbine (20), la roue du compresseur (18) est montée dans un carter de compresseur (22) et entre le carter de turbine et le carter de compresseur est prévu un carter médian (24) comprenant des paliers (26, 126, Fig. 2) supportant l'arbre (28), la pompe à basse pression (42) fournissant du liquide à basse pression par une conduite à basse pression (50) au carter médian (24) pour lubrifier les paliers, et la turbine hydraulique (56) étant montée dans le carter médian.

9. Système suivant la revendication 8, dans lequel le carter médian (24) comprend une chambre de circulation de turbine (80) contenant la roue de turbine (82) de la turbine hydraulique (56) et comportant une lumière d'admission (96) qui communique avec l'alimentation de liquide à haute pression provenant de la pompe à haute pression (58) et une lumière de sortie (104) qui communique avec la conduite à basse pression (50), de sorte qu'une contrepression est appliquée à la chambre de circulation (80) pour provoquer en substance un noyage immédiat de la chambre de circulation lorsque du liquide à haute pression est fourni pour entraîner la turbine hydraulique, de sorte que celle-ci fonctionne submergée dans le milieu non ventilé.

10. Système suivant la revendication 9 comprenant des moyens sur l'arbre pour pomper de l'air depuis la chambre de circulation lorsque du liquide à haute pression y est introduit et pour pomper du liquide hors de la chambre de circulation lorsque l'alimentation du liquide à haute pression cesse.

11. Système de suralimentation par turbocompresseur suivant la revendication 1, caractérisé en ce que la turbine hydraulique (56) comprend un carter à ajutages (86) et une roue de turbine à aubes tournante (98, 100) qui tourne dans une chambre de circulation close (80), la pompe (58) étant conçue pour refouler du liquide hydraulique à haute pression depuis le réservoir (40) par une conduite d'alimentation à haute pression (60, 64) vers le corps à ajutages (86) afin d'entraîner sélectivement la roue de turbine à aubes (98, 100), et le dispositif (42, 50) destiné à refouler du liquide hydraulique sous pression depuis le réservoir (40) vers le turbocompresseur de suralimentation (12) en vue d'assurer la lubrification de celui-ci comprenant une pompe à basse pression (42) propre à refouler du liquide hydraulique à basse pression par une conduite d'alimentation de lubrification (50) séparée de la conduite d'alimentation de haute pression (60, 64), et la chambre de circulation (80) comportant une lumière de sortie (104) communiquant par l'intermédiaire d'une valve de retenue (70) avec la conduite d'alimentation de lubrification (50), de sorte que, lorsque du liquide à haute pression provenant de la pompe (58) parvient au corps à ajutages (86) pour entraîner la roue de turbine (98, 100), une contrepression dérivée de la basse pression régnant dans la conduite d'alimentation de lubrification (50) est établie dans la chambre de circulation (80), provoquant le noyage en substance immédiat de la chambre de circulation, de sorte que la roue de turbine (98, 100) tourne submergée dans le milieu non ventilé dans la chambre de circulation (80).

12. Système de suralimentation par turbocompresseur suivant la revendication 11, caractérisé en ce que la turbine à gaz d'échappement (16) et le compresseur (18) du turbocompresseur (12) sont montés de part et d'autre d'un carter médian (24) de turbocompresseur, leurs roues de turbine et de compresseur étant montées sur un arbre commun (28) qui s'étend à travers des paliers (126) supportés par le carter médian (24) et qui tourillonne dans ceux-ci.

13. Système de suralimentation par turbocompresseur suivant la revendication 11 ou 12, caractérisé en ce que le circuit hydraulique (38) comprend une conduite de retour (54) destinée à renvoyer du liquide de lubrification à basse pression utilisé à partir du carter médian (24) vers le réservoir (40) en vue de sa recirculation.

14. Système de suralimentation par turbocompresseur suivant l'une quelconque des revendications 11 à 13, agencé de telle sorte qu'au terme du refoulement de liquide hydraulique vers la chambre de circulation, la rotation de l'arbre et de la roue de turbine hydraulique qui se poursuit a pour effet de pomper du liquide hors de la chambre de circulation.

15. Procédé de conduit d'un système de suralimentation par turbocompresseur suivant l'une quelconque des revendications précédentes, selon lequel on refoule du liquide hydraulique à une pression relativement élevée à partir du circuit hydraulique (38) vers la turbine hydraulique (56) avant de faire démarrer le moteur (14) pour entraîner la turbine hydraulique (56) complètement submergée et ainsi entraîner le compresseur (18) et fournir un débit d'air de suralimentation qui constitue au moins une partie de l'air de suralimentation alimentant le brûleur (181), on fournit du combustible au brûleur (181) pour produire un combustion avec l'air de suralimentation fourni en vue de produire des gaz d'échappement à haute énergie et on fournit les gaz à la turbine à gaz d'échappement (16) pour la faire accélérer jusqu'à un régime de fonctionnement autonome, puis on démarre le moteur (14).

16. Procédé suivant la revendication 15, suivant lequel, dans des conditions de fonctionnement du moteur à régime relativement bas, on dérive une fraction du flux d'air de suralimentation autour du moteur (14) vers le brûleur (181) pour l'y brûler avec du combustible en vue de renforcer le niveau d'énergie des gaz traversant le brûleur.

17. Procédé suivant la revendication 16, suivant lequel on régit le débit de l'air de suralimentation dérivé au moyen d'un valve de dérivation (186, 187) et on ferme la valve de dérivation (186) dans des conditions de fonctionnement du moteur à régime relativement élevé.

18. Procédé suivant la revendication 16, dans lequel l'opération de dérivation implique le calibrage du turbocompresseur (12) en général de manière à satisfaire les besoins de consommation d'air de suralimentation du moteur lorsque celui-ci fonctionne à un régime relativement élevé, étant entendu, qu'un débit de dérivation n'est pas disponible au dit régime élevé.

19. Procédé suivant l'une quelconque des revendications 15 à 18, suivant lequel on cesse de fournir du liquide à haute pression à partir du circuit hydraulique (38) à la turbine hydraulique (56) lorsque le brûleur (181) et le turbocompresseur de suralimentation (12) atteignent des conditions de fonctionnement autonomes.

20. Procédé suivant la revendication 19, suivant lequel on fournit le liquide à haute pression pour faire fonctionner un ventilateur destiné à refouler de l'air ambiant à travers un échangeur de chaleur d'air de suralimentation afin de refroidir l'air de suralimentation avant de le fournir au moteur.

Fig. 1.

0 040 910

FIG-2

0 040 910

FIG-7

FIG-8

FIG-3

FIG-6

FIG-4

FIG-5

3